# FASCICULE DE BREVET EUROPEEN

(11) **EP 0 593 351 B1**
(45) Date de publication et mention de la délivrance du brevet: **09.04.1997**
(21) Numéro de dépôt: 93402502.4
(22) Date de dépôt: 11.10.1993
(51) Int. Cl.: G01D 5/20, G01P 3/44, H02K 24/00, H01F 38/14

(54) **Capteur pour la mesure du déplacement angulaire d'une pièce mobile**
Sensor zum Messen der Winkelverschiebung eines sich bewegenden Gegenstandes
Sensor for measuring the angular displacement of a moving part

(30) Priorité: 13.10.1992 FR 9212227
(43) Date de publication de la demande: 20.04.1994
(73) Titulaire: GEC ALSTHOM PARVEX SA, 75116 Paris (FR)
(72) Inventeur: Maestre, Jean-Francois, F-21000 Dijon (FR)
(74) Mandataire: Fournier, Michel

(56) Documents cités:
- EP-A- 0 443 148
- EP-A- 0 554 900
- EP-A- 0 585 725
- PATENT ABSTRACTS OF JAPAN vol. 10, no. 168 (E-411)(2224) 14 Juin 1986 & JP-A-61 020 308
- PATENT ABSTRACTS OF JAPAN vol. 9, no. 31 (E-295)(1754) 9 Février 1985 & JP-A-59 175 369
- PATENT ABSTRACTS OF JAPAN vol. 13, no. 166 (E-746) 20 April 1989 & JP-A-63 318 725
- PATENT ABSTRACTS OF JAPAN vol. 12, no. 43 (P-664) 9 February 1988 & JP-A-62 190 414
- PATENT ABSTRACTS OF JAPAN vol. 10, no. 212 (P-480) 24 July 1986 & JP-A-61 051 515

## Description

L'invention concerne un capteur pour la mesure du déplacement angulaire d'une pièce mobile, ce capteur étant un capteur inductif à couplage magnétique variable, encore appelé résolver.

Un capteur de déplacement angulaire de type resolver comprend un rotor constitué d'un assemblage de tôles magnétiques supportant au moins un bobinage et un stator, constitué également d'un assemblage de tôles magnétiques et supportant aussi au moins un bobinage. Les assemblages de tôles rotor et stator sont séparés par un espace vide appelé entrefer. Le bobinage du rotor crée un flux radial à 2n pôles (n ≥l) sur la circonférence de l'entrefer, tous les pôles ayant la même position axiale. Le bobinage du stator a la même polarité que celui du rotor et recueille le flux créé par ce dernier. Le bobinage du rotor est alimenté par une tension alternative. A cause de la rotation du rotor, l'amplitude de la tension alternative induite dans le bobinage statorique n'est pas constante mais varie en fonction du sinus de l'angle de la rotation du rotor par rapport au stator. On recueille donc aux bornes du bobinage statorique une tension alternative modulée en amplitude par le sinus de l'angle de rotation du rotor par rapport au stator.

Le document JP-A-63 318 725 montre un tel capteur pour la mesure du déplacement angulaire d'une pièce mobile, de type resolver.

Le rotor et le stator d'un capteur de déplacement angulaire peuvent comprendre un, deux ou trois bobinages selon les cas. Un capteur transmetteur diphasé possède un rotor à un bobinage et un stator à deux bobinages. Les bobinages statoriques sont disposés de façon que l'un délivre une tension d'amplitude modulée en sinus de l'angle de rotation et que l'autre délivre une tension d'amplitude en cosinus du même angle.

Les versions les plus robustes et les plus fiables des capteurs de déplacement angulaire sont ceux possédant un transformateur tournant constitué de deux bobines concentriques, l'une servant de primaire au transformateur et l'autre servant de secondaire.

La tension d'excitation du capteur est alors fournie par l'intermédiaire du secondaire du transformateur. Le secondaire du transformateur est monté sur la pièce servant de rotor et est donc solidaire en rotation du bobinage ou des bobinages rotoriques. Leur connexion électrique par fils de liaison ne pose donc aucun problème.

L'utilisation d'un transformateur tournant évite l'utilisation de collecteurs comprenant des bagues et des balais. Cependant le transformateur est à l'origine de tensions parasites qui nuisent à la précision du capteur.

Le couplage magnétique entre le transformateur tournant et le capteur est théoriquement nul. En effet le bobinage du capteur n'est sensible qu'aux flux de polarité 2n alors que le transformateur crée un flux homopolaire. En pratique, il existe de légères dissymétries dans le bobinage et dans la répartition du flux. Ces dissymétrie font que les tensions induites, par le transformateur tournant, en sortie du dispositif de mesure, ne sont pas nulles.

On pourrait remédier à ces phénomènes dûs aux tensions parasites en écartant la partie transformateur de la partie dispositif de mesure. Un écart de l'ordre de 1 cm est alors nécessaire. Cependant cette solution n'est pas satisfaisante. En effet, on demande aux capteurs de déplacement angulaire d'avoir une très bonne précison tout en ayant l'encombrement le plus réduit possible. En outre, un capteur de faible encombrement peut être logé directement dans le moteur auquel il est destiné, ce qui contribue à réduire le coût de l'ensemble.

Les documents EP-A-0 585 725 (cité conformément à l'Article 54(3) CBE) et JP-A-61 020 308 décrivent l'utilisation d'un blindage magnétique global ou en forme de spire. De tels blindages apportent une solution satisfaisante au problème bien connu de l'homme de métier de couplage magnétique entre deux bobines concentriques. Un tel couplage, naturel et important, se caractérise par une inductance mutuelle entre deux bobines.

Un tel couplage magnétique ne doit pas être confondu avec les flux de fuite homopolaires tels que décrits ci-dessus.

L'invention apporte une solution satisfaisante à ce problème. Elle autorise des écarts de l'ordre de 3 mm entre la partie transformateur et la partie dispositif de mesure tout en conservant la même précision que pour les capteurs de l'art antérieur qui ont des écarts de l'ordre de 1 cm entre ces parties.

Selon l'invention, le flux de fuite homopolaire est fortement réduit par la présence d'une spire en matériau conducteur de l'électricité et en court-circuit, disposée sur le seul côté située entre le transformateur et la partie dispositif de mesure. En présence d'un flux de fuite homopolaire, cette spire est parcourue par un courant en opposition de phase par rapport au courant circulant dans le secondaire du transformateur. Ce courant s'oppose au passage du flux de fuite homopolaire vers les assemblages de tôles magnétiques du dispositif de mesure.

Cette spire est réalisée en matériau amagnétique pour éviter le passage, sur la surface de la spire, des lignes de flux de fuite homopolaire. En effet, si la spire était en matériau magnétique, des lignes de flux homopolaire passeraient en surface. La spire étant en matériau amagnétique, les lignes de flux de fuite homopolaire sont forcées de passer dans l'air.

L'invention a donc pour objet un capteur pour la mesure du déplacement angulaire d'une pièce mobile, de type resolver, comprenant un transformateur tournant comportant un enroulement primaire et un enroulement secondaire, et un dispositif de mesure comportant au moins un bobinage statorique et au moins un bobinage rotorique , un stator supportant l'enroulement primaire et le bobinage statorique, un rotor supportant l'enroulement secondaire et le bobinage rotorique, caractérisé en ce qu'il comprend en outre une spire en court-circuit en matériau conducteur de l'électricité et amagnétique, disposée sur le seul coté situé entre le transformateur tournant et le dispositif de mesure pour faire obstacle aux lignes du flux de fuite homopolaire du transformateur tournant vers le dispositif de mesure.

La spire peut prendre la forme d'une rondelle ou d'un tube. Elle peut prendre une forme résultant de la combinaison d'une rondelle et d'un tube.

Le transformateur tournant peut comporter une carcasse magnétique fixée au stator et recevant l'enroulement primaire et une carcasse magnétique fixée au rotor et recevant l'enroulement secondaire. Le dispositif de mesure peut comporter un empilement de tôles magnétiques fixées au stator et recevant le bobinage statorique et un empilement de tôles magnétiques fixées au rotor et recevant le bobinage rotorique.

Dans ce cas, la spire en court-circuit peut être une rondelle disposée sur le flanc de la carcasse rotorique du transformateur et/ou une rondelle disposée sur le flanc de la carcasse statorique du transformateur. La spire peut aussi être un tube placé sur le rotor et/ou un tube placé sur la surface interne du stator. La spire peut encore être une tôle placée sur l'empilement de tôles rotoriques et/ou une tôle placée sur l'empilement de tôles statoriques.

Le rotor et la carcasse rotorique du transformateur peuvent être des parties d'une même pièce réalisée en matériau magnétique.

La spire peut être par exemple réalisée en cuivre, en aluminium ou en inox amagnétique.

L'invention sera mieux comprise et d'autres avantages apparaîtront à la lecture de la description qui va suivre, donnée à titre non limitatif, accompagnée des dessins annexés parmi lesquels :
- la figure 1 est une vue en coupe d'un capteur selon l'art connu,
- les figures 2 à 7 illustrent différentes variantes de mises en oeuvre de l'invention sur un capteur du type représenté à la figure 1.

Bien que la description va porter sur un capteur pour la mesure du déplacement angulaire d'une pièce mobile, l'invention s'applique à tout dispositif de mesure, de type électromagnétique, de la position d'une pièce mobile (en rotation ou en translation) par rapport à une pièce de référence comprenant au moins une première bobine alimentée par une tension et une deuxième bobine placée sur cette pièce mobile et fournissant à ses bornes une tension de mesure dépendant de l'amplitude du déplacement.

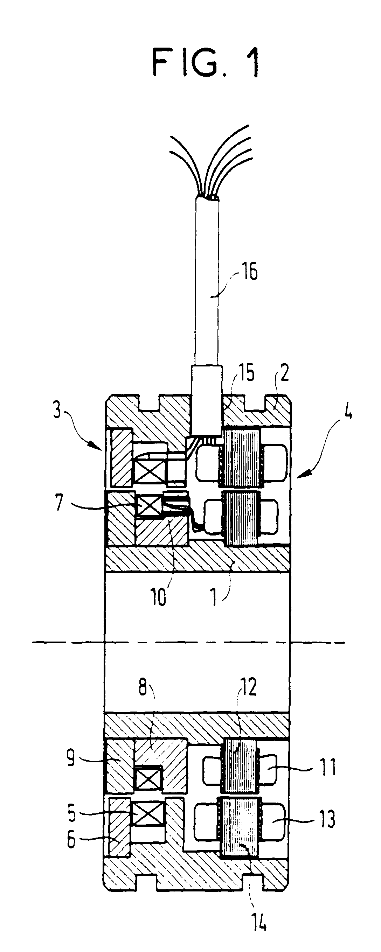

La description va porter plus précisément sur un capteur de déplacement angulaire dont la partie dispositif de mesure comporte un bobinage rotorique et deux bobinages statoriques. Un tel capteur est représenté à la figure 1 dans une version selon l'art connu. Il comporte un rotor 1 et un stator 2 concentriques, un transformateur tournant 3 et un dispositif de mesure 4. Le rotor est en matériau amagnétique et le stator en matériau magnétique. L'enroulement primaire 5 du transformateur tournant est disposé dans une carcasse magnétique constituée en partie par des éléments de forme du stator et en partie par un élément de fermeture annulaire 6 fixé au stator. L'enroulement secondaire 7 est disposé dans une carcasse magnétique constituée de deux parties logées sur le rotor 1 : une première partie 8 mise en butée sur le rotor et comportant un logement de réception de l'enroulement secondaire, et une deuxième partie 9 de fermeture du logement. Ces deux parties 8 et 9 sont fixées au rotor. Un passage 10 est prévu dans la partie 8 pour les fils de connexion entre le secondaire du transformateur et le dispositif de mesure.

Le dispositif de mesure 4 comporte un bobinage rotorique 11 disposé sur un empilement de tôles magnétiques 12 et connecté à l'enroulement secondaire du transformateur. Les bobinages statoriques 13 sont disposés sur un empilement de tôles magnétiques 14. L'empilement rotorique est fixé sur le rotor et l'empilement statorique sur le stator. Le stator 2 comporte un orifice 15 permettant le passage des fils électriques 16 : deux fils pour l'alimentation de l'enroulement primaire du transformateur et les quatre fils de sortie du dispositif de mesure.

Avec cette disposition, le flux de fuite du transformateur induit des tensions parasites dans la partie dispositif de mesure qui détériorent la précision du resolver. Comme il a été dit plus haut, il faudrait écarter la partie transformateur de la partie dispositif de mesure pour améliorer la précision du resolver.

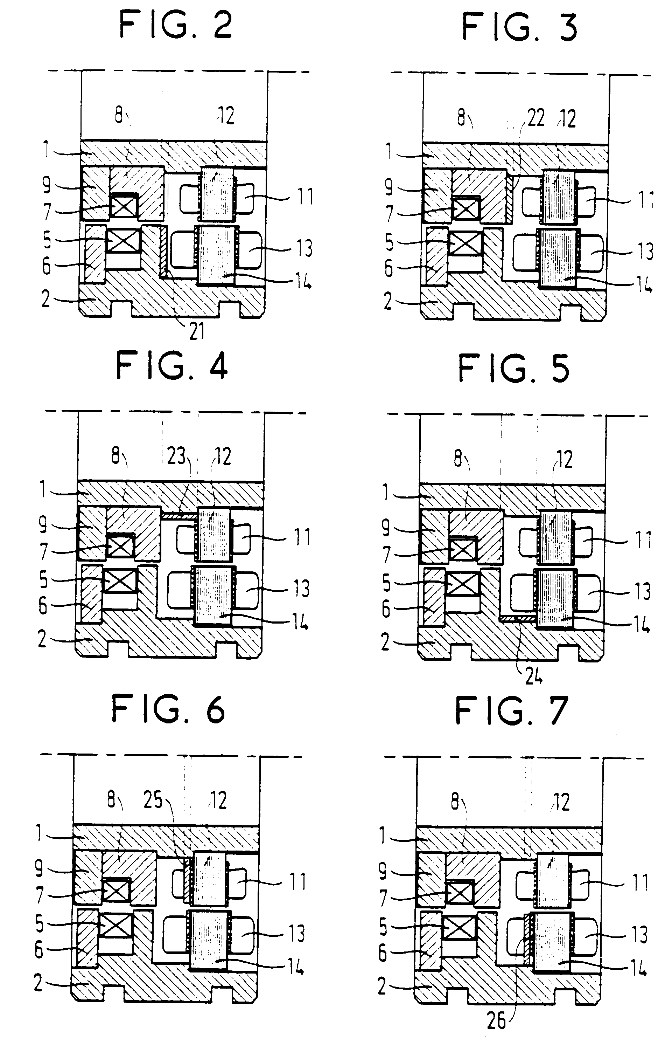

Les figures 2 à 7 sont des vues partielles qui présentent différentes variantes de l'invention. Les mêmes références qu'à la figure 1 représentent les mêmes éléments.

Le capteur de la figure 2 comporte une spire en court-circuit constituée par une rondelle 21 fixée, par exemple par collage, sur le bord de la carcasse magnétique de l'enroulement primaire situé côté dispositif de mesure.

Le capteur de la figure 3 comporte une spire en court-circuit constituée par une rondelle 22 fixée, par exemple par collage, sur le bord de la carcasse magnétique de l'enroulement secondaire situé côté dispositif de mesure.

Le capteur de la figure 4 comporte une spire en court-circuit constituée par un tube 23 fixé, par exemple par collage ou par ajustement serré, sur le rotor 1 entre la pièce 8 et l'empilement de tôle 12.

Le capteur de la figure 5 comporte une spire en court-circuit constituée par un tube 24 fixé, par exemple par collage ou par ajustement serré, sur la partie interne du stator 2 entre la carcasse magnétique de l'enroulement primaire et l'empilement de tôles 14.

Le capteur de la figure 6 comporte une spire en court-circuit constituée par une tôle supplémentaire 25 fixée, par exemple par collage, sur l'empilement de tôles 12 et côté interne au capteur.

Le capteur de la figure 7 comporte une spire en court-circuit constituée par une tôle supplémentaire 26 fixée, par exemple par collage, sur l'empilement de tôles 14 et côté interne au capteur.

Pour ces deux dernières variantes, la tôle supplémentaire est bien sûr de nature différente des tôles des empilements puisqu'elle doit être amagnétique.

Le cuivre est un matériau tout indiqué pour réaliser cette spire. On peut également utiliser l'aluminium ou de l'inox amagnétique.

Un rondelle de cuivre, telle que celle représentée à la figure 2, de 0,5 mm d'épaisseur atténue environ d'un facteur 10 le flux de fuite du transformateur. Ainsi l'erreur due au flux de fuite est réduite de façon très importante.

La spire en court-circuit faisant obstacle aux flux de fuite du transformateur, on peut envisager maintenant de réaliser en une seule pièce magnétique le rotor 1 et la partie 8 de la carcasse de l'enroulement secondaire du transformateur. Ceci contribue à diminuer le prix de revient de l'ensemble.

## Revendications

1. Capteur pour la mesure du déplacement angulaire d'une pièce mobile, de type resolver, comprenant un transformateur tournant comportant un enroulement primaire (5) et un enroulement secondaire (7), et un dispositif de mesure comportant au moins un bobinage statorique (13) et au moins un bobinage rotorique (11), un stator (2) supportant l'enroulement primaire et le bobinage statorique, un rotor (1) supportant l'enroulement secondaire et le bobinage rotorique, caractérisé en ce qu'il comprend en outre une spire en court-circuit (21 à 26) en matériau conducteur de l'électricité et amagnétique, disposée sur le seul coté situé entre le transformateur tournant et le dispositif de mesure pour faire obstacle aux lignes du flux de fuite homopolaire du transformateur tournant vers le dispositif de mesure.

2. Capteur selon la revendication 1, caractérisé en ce que la spire en court-circuit est une rondelle (21, 22).

3. Capteur selon la revendication 1, caractérisé en ce que la spire en court-circuit est un tube (23, 24).

4. Capteur selon la revendication 1, caractérisé en ce que le transformateur tournant comporte une carcasse magnétique fixée au stator et recevant l'enroulement primaire et une carcasse magnétique fixée au rotor et recevant l'enroulement secondaire, le dispositif de mesure comporte un empilement de tôles magnétiques fixées au stator et recevant le bobinage statorique et un empilement de tôles magnétiques fixées au rotor et recevant le bobinage rotorique.

5. Capteur selon la revendication 4, caractérisé en ce que la spire en court-circuit est une rondelle (22) disposée sur le flanc de la carcasse rotorique du transformateur et/ou une rondelle (21) disposée sur le flanc de la carcasse statorique du transformateur.

6. Capteur selon la revendication 4, caractérisé en ce que la spire en court-circuit est un tube (23) placé sur le rotor et/ou un tube (24) placé sur la surface interne du stator.

7. Capteur selon la revendication 4, caractérisé en ce que la spire en court-circuit est une tôle (25) placée sur l'empilement de tôles rotoriques et/ou une tôle (26) placée sur l'empilement de tôles statoriques.

8. Capteur selon l'une quelconque des revendications 4 à 7, caractérisé en ce que le rotor et la carcasse rotorique du transformateur sont des parties d'une même pièce réalisée en matériau magnétique.

9. Capteur selon l'une quelconque des revendications précédentes, caractérisé en ce que la spire est en cuivre, en aluminium ou en inox amagnétique.

## Patentansprüche

1. Sonde für die Messung der Winkelverschiebung eines beweglichen Bauteils, vom Resolvertyp, mit einem drehenden Transformator, der eine Primärwicklung (5) und eine Sekundärwicklung (7) besitzt, und mit einer Meßvorrichtung, die mindestens eine Statorwicklung (13) und mindestens eine Rotorwicklung (11) enthält, wobei ein Stator (2) die Primärwicklung des Transformators und die Statorwicklung der Meßvorrichtung trägt, während ein Rotor (1) die Sekundärwicklung des Transformators und die Rotorwicklung der Meßvorrichtung trägt, dadurch gekennzeichnet, daß weiter eine Kurzschlußschleife (21 bis 26) aus einem elektrisch leitenden und unmagnetischem Material vorgesehen ist, die nur auf der Seite zwischen dem drehenden Transformator und der Meßvorrichtung liegt, um die hompolaren Leckflußlinien des drehenden Transformators daran zu hindern, zur Meßvorrichtung zu gelangen.

2. Sonde nach Anspruch 1, dadurch gekennzeichnet, daß die Kurzschlußschleife eine Ringscheibe (21, 22) ist.

3. Sonde nach Anspruch 1, dadurch gekennzeichnet, daß die Kurzschlußschleife ein Rohr (23, 24) ist.

4. Sonde nach Anspruch 1, dadurch gekennzeichnet, daß der drehende Transformator einen am Stator befestigten magnetischen Kern enthält, der die Primärwicklung aufnimmt, und einen am Rotor befestigten magnetischen Kern, der die Sekundärwicklung aufnimmt, während die Meßvorrichtung ein Magnetblechpaket enthält, das am Stator befestigt ist und die Statorwicklung aufnimmt, und ein am Rotor befestigtes Magnetblechpaket, das die Rotorwicklung aufnimmt.

5. Sonde nach Anspruch 4, dadurch gekennzeichnet, daß die Kurzschlußschleife eine Lochscheibe (22) ist, die auf der Flanke des Rotorkerns des Transformators liegt, und/oder eine Ringscheibe (21), die auf der Flanke des Statorkerns des Transformators angeordnet ist.

6. Sonde nach Anspruch 4, dadurch gekennzeichnet, daß die Kurzschlußschleife ein Rohr (23) ist, das auf dem Rotor sitzt, und/oder ein Rohr (24), das auf der Innenoberfläche des Stators sitzt.

7. Sonde nach Anspruch 4, dadurch gekennzeichnet, daß die Kurzschlußschleife ein auf dem Rotorblechpaket sitzendes Blech (25) und/oder ein auf dem Statorblechpaket sitzendes Blech (26) ist.

8. Sonde nach einem beliebigen der Ansprüche 4 bis 7, dadurch gekennzeichnet, daß der Sondenrotor und der Rotorkern des Transformators Teile eines gemeinsamen aus magnetischem Material bestehenden Bauteils sind.

9. Sonde nach einem beliebigen der vorhergehenden Ansprüche, dadurch gekennzeichnet, daß die Schleife aus Kupfer, Aluminium oder aus unmagnetischem Edelstahl gebildet ist.

## Claims

1. A sensor for measuring the angular displacement of a moving part, the sensor being of the resolver type and comprising firstly a rotary transformer including a primary winding (5) and a secondary winding (7), and secondly a measuring device including at least one stator coil (13) and at least one rotor coil (11), a stator (2) supporting the primary winding and the stator coil, and a rotor (1) supporting the secondary winding and the rotor coil, said sensor being characterized in that it further comprises a short-circuit turn (21 to 26) made of a non-magnetic electrically-conductive material and disposed only on the side situated between the rotary transformer and the measuring device so as to obstruct the lines of the homopolar leakage flux from the rotary transformer towards the measuring device.

2. A sensor according to claim 1. characterized in that the short-circuit turn is a washer (21, 22).

3. A sensor according to claim 1, characterized in that the short-circuit turn is a tube (23, 24).

4. A sensor according to claim 1, characterized in that the rotary transformer includes a magnetic body fixed to the stator and receiving the primary winding, and a magnetic body fixed to the rotor and receiving the secondary winding, and the measuring device includes a stack of magnetic laminations fixed to the stator and receiving the stator coil and a stack of magnetic laminations fixed to the rotor and receiving the rotor coil.

5. A sensor according to claim 4, characterized in that the short-circuit turn is a washer (22) disposed on the side of the rotor body of the transformer and/or a washer (21) disposed on the side of the stator body of the transformer.

6. A sensor according to claim 4, characterized in that the short-circuit turn is a tube (23) placed on the rotor and/or a tube (24) placed on the inside surface of the stator.

7. A sensor according to claim 4, characterized in that the short-circuit turn is a lamination (25) placed on the stack of rotor laminations and/or a lamination (26) placed on the stack of stator laminations.

8. A sensor according to any one of claims 4 to 7, characterized in that the rotor and the rotor body of the transformer are portions of the same part made of a magnetic material.

9. A sensor according to any preceding claim, characterized in that the short-circuit turn is made of copper, of aluminum, or of non-magnetic stainless steel.
